# EUROPÄISCHE PATENTANMELDUNG

(11) **EP 4 699 873 A1**
(43) Veröffentlichungstag der Anmeldung: **25.02.2026**
(21) Anmeldenummer: 25189340.0
(22) Anmeldetag: 14.07.2025
(51) Int. Cl.: B60T 1/06, F16D 59/02, F16D 67/02, F16D 67/06

(54) **KUPPLUNGS-BREMS-EINHEIT UND LUFTFAHRZEUG**

(30) Priorität: 20.08.2024 DE 102024123747
(71) Anmelder: Liebherr-Aerospace Lindenberg GmbH, 88161 Lindenberg (DE)
(72) Erfinder: SCHWEITZER, Boris, 88161 Lindenberg (DE)
(74) Vertreter: Lorenz Seidler Gossel Part. mbB

(57) **Zusammenfassung**

Die vorliegende Erfindung betrifft eine Kupplungs-Brems-Einheit, insbesondere für ein Luftfahrzeug, mit einer Bremse, einer Kupplung und einer Steuereinheit, die derart ausgebildet und angeordnet ist, um die Bremse und/oder die Kupplung anzusteuern, wobei die Steuereinheit einen Aktuator und ein bewegbares Steuerglied aufweist, wobei der Aktuator dazu ausgebildet und angeordnet ist, um das Steuerglied aus einer Neutralstellung in eine erste und/oder zweite Steuerstellung zu bewegen, wodurch die Bremse und/oder die Kupplung angesteuert werden kann.

## Beschreibung

Die vorliegende Erfindung betrifft eine Kupplungs-Brems-Einheit, insbesondere für ein Luftfahrzeug, mit einer Bremse, einer Kupplung und einer Steuereinheit, die derart ausgebildet und angeordnet ist, um die Bremse und/oder die Kupplung anzusteuern.

Aus dem Stand der Technik bekannt sind Kupplungs-Brems-Einheiten bzw. Kupplungs-Brems-Kombinationen, bei denen eine jeweils federbeaufschlagte Bremse und/oder Kupplung elektrisch, insbesondere durch Elektromagneten, hydraulisch oder pneumatisch betätigt oder angesteuert wird.

Solche Kupplungs-Brems-Einheiten werden bspw. für das Antreiben oder Abbremsen von Steuerklappen in Flugzeugen eingesetzt.

Bekannte Bremsen, Kupplungen und/oder Kupplungs-Brems-Einheiten, die elektrisch betätigt werden, werden mittels Elektromagneten geöffnet bzw. geschlossen. Bei bekannten Kupplungs-Brems-Einheiten wird dies bspw. durch zwei Spulen realisiert. Elektromagneten sind jedoch schwer und haben für diese Anwendung eine ungünstige Kennlinie. Die Magnetkraft nimmt quadratisch zum Abstand zwischen Magnet und Joch ab. Damit lassen sich mit Elektromagneten kaum große Hübe mit Kraft überwinden; erst bei kleinen Spalten steht ausreichend Kraft zur Verfügung. Dieser Nachteil kann wiederum bspw. mit größeren Magneten kompensiert werden, die aber wiederum schwer sind.

Vor diesem Hintergrund liegt der vorliegenden Erfindung die Aufgabe zugrunde, eine oben genannte Kupplungs-Brems-Einheit zu verbessern und insbesondere die Nachteile des Stands der Technik zu beseitigen oder zu verringern.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Steuereinheit einen Aktuator und ein bewegbares Steuerglied aufweist, wobei der Aktuator dazu ausgebildet und angeordnet ist, um das Steuerglied aus einer Neutralstellung in eine erste und/oder zweite Steuerstellung zu bewegen, wodurch die Bremse und/oder die Kupplung angesteuert werden kann.

Vorzugsweise ist der Aktuator dazu ausgebildet und angeordnet, um das Steuerglied aus der ersten und/oder zweiten Steuerstellung in die Neutralstellung zu bewegen, wodurch die Bremse und/oder die Kupplung angesteuert werden kann.

Der Begriff "Ansteuern" ist im Rahmen dieser Erfindung vorzugsweise derart zu verstehen, dass ein Öffnen oder Schließen der jeweiligen angesteuerten Komponente mittels, insbesondere einer Bewegung, der ansteuernden Komponente erfolgt.

Vorzugsweise ist vorgesehen, dass der Aktuator ein elektrischer Aktuator, insbesondere ein Elektromotor, ist und/oder eine drehbare Welle und/oder ein Ritzel aufweist.

Vorzugsweise kann bei der Kupplungs-Brems-Einheit, insbesondere bei geringen Abmessungen und geringem Gewicht, sowohl die Kupplung als auch die Bremse mittels eines Aktuators betätigt bzw. angesteuert werden.

Der Aktuator kann ein hydraulischer, pneumatischer oder elektrischer Aktuator sein. Besonders bevorzugt ist der Aktuator ein Elektromotor.

Vorzugsweise ist der Elektromotor der Antrieb für das Steuerglied. Der Elektromotor dreht sich vorzugsweise entweder im Uhrzeigersinn oder gegen den Uhrzeigersinn oder steht in einer Mittelstellung.

Vorzugsweise steht das Steuerglied bei der Mittelstellung des Elektromotors in der Neutralstellung, wobei die Kupplung und die Bremse geschlossen sind. Der Elektromotor ist in der Mittelstellung vorzugsweise stromlos.

In einem geschlossenen Zustand der Bremse oder der Kupplung ist vorzugsweise ein Kraft- und/oder Momentenfluss durch die Bremse bzw. die Kupplung möglich. In einem offenen Zustand der Bremse oder der Kupplung ist vorzugsweise kein Kraft- und/oder Momentenfluss durch die Bremse bzw. die Kupplung möglich.

Vorzugsweise wird das Steuerglied bei einer Drehung des Elektromotors im Uhrzeigersinn in die erste Steuerstellung bewegt, wobei die Bremse geöffnet wird und die Kupplung geschlossen bleibt.

Vorzugsweise wird das Steuerglied bei einer Drehung des Elektromotors gegen den Uhrzeigersinn in die zweite Steuerstellung bewegt, wobei die Kupplung geöffnet wird und die Bremse geschlossen bleibt.

Es ist auch denkbar, dass die Drehung des Elektromotors im Uhrzeigersinn zu der zweiten Steuerstellung des Steuerglieds und eine Drehung des Elektromotors gegen den Uhrzeigersinn zu der ersten Steuerstellung des Steuerglieds führt. In anderen Worten können die Drehrichtungen je nach Mechanik auch vertauscht werden.

Vorzugsweise wird das Steuerglied nicht durch einen Elektromagneten angesteuert.

Vorzugsweise ist vorgesehen, dass das Steuerglied ein Zahnsegment, das insbesondere mit dem Ritzel in Eingriff steht, aufweist.

Vorzugsweise ist vorgesehen, dass das Steuerglied derart ausgebildet und angeordnet ist, um in der ersten Steuerstellung die Bremse anzusteuern und um in der zweiten Steuerstellung die Kupplung anzusteuern, wobei in der Neutralstellung weder die Bremse noch die Kupplung angesteuert werden.

Vorzugsweise ist vorgesehen, dass das Steuerglied, vorzugsweise jeweils an gegenüberliegenden Seiten, eine Steuerrampe und/oder eine Nut aufweist.

Vorzugsweise ist vorgesehen, dass die Steuereinheit ein erstes und/oder ein zweites Steuerelement aufweist, wobei das erste Steuerelement vorzugsweise an einer Seite des Stellglieds angeordnet ist und/oder wobei das zweite Steuerelement vorzugsweise an der anderen Seite des Stellglieds angeordnet ist.

Vorzugsweise ist vorgesehen, dass das erste und/oder das zweite Steuerelement eine Steuerrampe und/oder eine Nut aufweisen.

Vorzugsweise ist vorgesehen, dass das erste Steuerelement zum Ansteuern der Bremse und das zweite Steuerelement zum Ansteuern der Kupplung ausgebildet und angeordnet ist.

Vorzugsweise ist vorgesehen, dass die Steuereinheit ein erstes und/oder ein zweites Übertragungselement aufweist, wobei das erste Übertragungselement an einer Seite des Stellglieds angeordnet ist und/oder wobei das zweite Übertragungselement an einer anderen Seite des Stellglieds angeordnet ist.

Vorzugsweise ist vorgesehen, dass das erste Übertragungselement zwischen dem Steuerglied und dem ersten Steuerelement und/oder das zweite Übertragungselement zwischen dem Stellglied und dem zweiten Steuerelement angeordnet ist, wobei jedes Übertragungselement vorzugsweise direkt an einer Steuerrampe oder Nut angeordnet ist.

Vorzugsweise ist das Übertragungselement eine Kugel oder eine Rolle.

Vorzugsweise ist die Steuerrampe eine Kugel- oder Rollenrampe und/oder die Nut eine Kugel- oder Rollennut.

Vorzugsweise ist vorgesehen, dass die Kupplungs-Brems-Einheit Federeinheiten aufweist, wobei die Bremse und/oder die Kupplung in der Neutralstellung des Steuerglieds durch jeweils eine Federeinheit geöffnet oder geschlossen gehalten werden.

Vorzugsweise ist vorgesehen, dass das Steuerglied, insbesondere durch ein Axiallager, gegen eine axiale Bewegung gegenüber der Kupplungs-Brems-Einheit abgestützt ist.

Die Kupplungs-Brems-Einheit kann mit einer "Power on"-Auslegung oder mit einer "Power off"- Auslegung ausgeführt sein.

Bei der "Power on"-Auslegung sind die Kupplung und die Bremse vorzugsweise geöffnet, wenn sich das Steuerglied in der Neutralstellung befindet. In den jeweiligen Steuerstellungen des Steuerglieds sind die Kupplung oder die Bremse vorzugsweise geschlossen. Vorzugsweise sind die Kupplung und die Bremse bei der "Power on"-Auslegung in keinem Betriebszustand gleichzeitig geschlossen.

Bei der "Power off"-Auslegung sind die Kupplung und die Bremse vorzugsweise geschlossen, wenn sich das Steuerglied in der Neutralstellung befindet. In den jeweiligen Steuerstellungen des Steuerglieds sind die Kupplung oder die Bremse vorzugsweise geöffnet. Vorzugsweise sind die Kupplung und die Bremse bei der "Power off"-Auslegung in keinem Betriebszustand gleichzeitig geöffnet.

In anderen Worten werden bei der "Power off"-Auslegung die Kupplung und die Bremse in dem Fall, dass keine, insbesondere hydraulische, pneumatische und/oder elektrische, Energie an dem Aktuator anliegt, geschlossen. Insbesondere in dem Fall, dass zwischen Kupplung und Bremse der Zusammenhang besteht, dass entweder beide geschlossen sind oder nur eine der Beiden geöffnet sein soll, kann die Ansteuerung der Kupplung und der Bremse von einem Steuerglied bzw. Ansteuerelement übernommen werden. Aber auch bei der "Power on"-Auslegung ist eine Ansteuerung der Kupplung und der Bremse durch ein Steuerglied denkbar.

Vorzugsweise ist bei der "Power off"-Auslegung ein gleichzeitiges Öffnen und bei der "Power on"-Auslegung ein gleichzeitiges Schließen von Kupplung und Bremse ausgeschlossen. Vorzugsweise ist bei der "Power off"-Auslegung ein gleichzeitiges Schließen oder ein gleichzeitiges geschlossen halten von Kupplung und Bremse möglich. Vorzugsweise können die Kupplung und die Bremse einzeln immer geöffnet werden.

Vorzugsweise ist vorgesehen, dass die Steuereinheit derart ausgebildet und angeordnet ist, um die Bremse und/oder die Kupplung derart ansteuern zu können, dass entweder die Bremse oder die Kupplung geöffnet oder die Bremse und die Kupplung beide geschlossen sind, wobei die Bremse und die Kupplung in keinem Betriebszustand der Kupplungs-Brems-Einheit beide geöffnet sind. Dies ist vorzugsweise bei einer "Power off"-Auslegung der Kupplungs-Brems-Einheit der Fall.

Vorzugsweise ist vorgesehen, dass die Steuereinheit derart ausgebildet und angeordnet ist, um die Bremse und die Kupplung derart ansteuern zu können, dass entweder die Bremse oder die Kupplung geschlossen oder die Bremse und die Kupplung beide geöffnet sind, wobei die Bremse und die Kupplung in keinem Betriebszustand der Kupplungs-Brems-Einheit beide geschlossen sind. Dies ist vorzugsweise bei einer "Power on"-Auslegung der Kupplungs-Brems-Einheit der Fall.

Die Erfindung betrifft auch ein Luftfahrzeug, insbesondere Flugzeug, mit einer erfindungsgemäßen Kupplungs-Brems-Einheit.

Vorzugsweise ist vorgesehen, dass die Kupplungs-Brems-Einheit Bestandteil eines Hochauftriebssystems eines Luftfahrzeugs ist und/oder mit einer Steuerklappe verbunden ist.

Sofern die Kupplungs-Brems-Einheit zur Ansteuerung einer Steuerklappe verwendet wird, ist für eine, insbesondere aktive, Bewegung der Steuerklappe, also insbesondere wenn die Steuerklappe bewegt werden soll, die Bremse vorzugsweise geöffnet und die Kupplung vorzugsweise geschlossen.

Sofern die Kupplungs-Brems-Einheit zur Ansteuerung einer Steuerklappe verwendet wird, ist für ein Schweben bzw. "Floaten" der Steuerklappe die Bremse vorzugsweise geschlossen und die Kupplung vorzugsweise geöffnet.

Sofern die Kupplungs-Brems-Einheit zur Ansteuerung einer Steuerklappe verwendet wird, sind für ein Festlegen bzw. Fixieren der Steuerklappe die Kupplung und die Bremse vorzugsweise geschlossen. Vorzugsweise ist der Elektromotor hierbei stromlos.

Die Erfindung betrifft auch ein Verfahren zum Betätigen einer erfindungsgemäßen Kupplungs-Brems-Einheit mit den folgenden Schritten:
- Bewegen des Steuerglieds aus einer Neutralstellung in eine erste Steuerstellung durch den Aktuator, wobei sich die Bremse öffnet oder schließt, wobei die Kupplung geöffnet oder geschlossen bleibt; und/oder
- Bewegen des Steuerglieds aus einer Neutralstellung in eine zweite Steuerstellung durch den Aktuator, wobei sich die Kupplung öffnet oder schließt, wobei die Bremse geöffnet oder geschlossen bleibt; und/oder
- Bewegen des Steuerglieds aus einer ersten oder zweiten Steuerstellung in eine Neutralstellung durch den Aktuator, wobei sich die Bremse oder die Kupplung öffnet oder schließt, wobei die Bremse oder die Kupplung geöffnet oder geschlossen bleiben.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

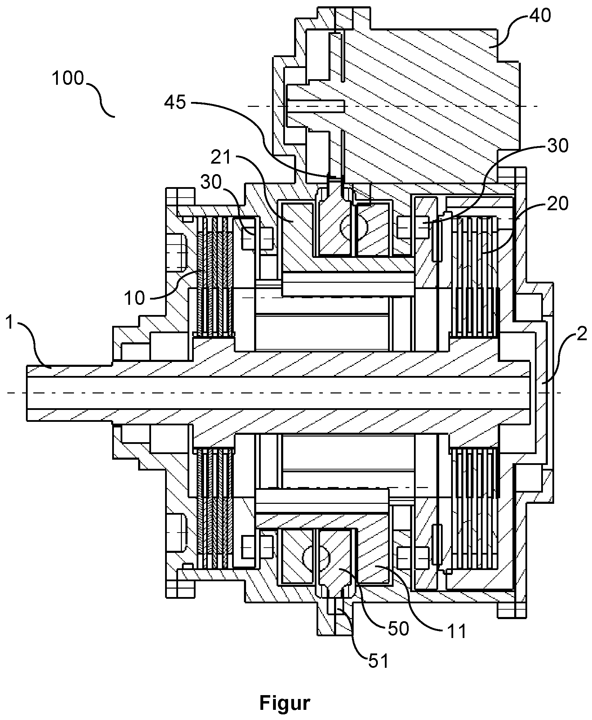

Weitere Vorteile, Merkmale und Effekte der vorliegenden Erfindung ergeben sich aus der nachstehenden Beschreibung bevorzugter Ausführungsbeispiele unter Bezugnahme auf die einzige Figur, in welcher gleiche oder ähnliche Bauteile durch dieselben Bezugszeichen bezeichnet sind.

Die Figur zeigt den schematischen Aufbau einer Ausführungsform einer erfindungsgemäßen Kupplungs-Brems-Einheit in einer Schnittansicht.

Die Kupplungs-Brems-Einheit 100 weist einen Antrieb 1 in Form einer Antriebswelle und einen Abtrieb 2 auf.

Die Kupplungs-Brems-Einheit 100 weist eine Bremse 10 und eine Kupplung 20 auf. Die Bremse 10 ist eine Lamellenbremse und die Kupplung 20 ist eine Lamellenkupplung

Die Bremse 10 und die Kupplung 20 weisen jeweils Rotoren und Statoren in Lamellenform auf.

Die Antriebswelle ist mit den Rotoren der Bremse 10 und den Rotoren der Kupplung 20 jeweils über eine Keilwellenverbindung verbunden.

Die Statoren der Bremse 10 sind mit einem Gehäuse der Kupplungs-Brems-Einheit 100 verbunden und leiten ein in den Abtrieb 2 oder in den Antrieb 1 eingeleitetes Bremsmoment bei geschlossener Bremse 10 in das Gehäuse ab.

Die Statoren der Kupplung 20 sind mit dem Abtrieb 2 verbunden. Die Kupplung 20 gibt in ihrem geschlossenen Betriebszustand ein in den Antrieb 1 eingeleitetes Antriebsmoment an den Abtrieb 2 weiter.

Ferner weist die Kupplungs-Brems-Einheit 100 eine Steuereinheit mit einem Aktuator 40 in Form eines Elektromotors mit einem Ritzel und einem Steuerglied 50 in Form einer Steuerscheibe auf. Das Steuerglied 50 kann auch als "ball ramp plate" bezeichnet werden.

Das Steuerglied 50 kann insbesondere eine Neutralstellung, eine erste Steuerstellung und eine zweite Steuerstellung einnehmen.

Das Steuerglied 50 weist ein Zahnsegment 45, das mit dem Ritzel des Elektromotors in Eingriff steht, auf.

Benachbart zu dem Steuerglied befindet ein erstes Steuerelement 11, das bei Bewegung des Steuerglieds 50 in die erste Steuerstellung die Bremse 10 öffnen kann, wobei zwischen dem Steuerglied 50 und dem erstem Steuerelement 11 ein erstes Übertragungselement angeordnet ist.

Benachbart zu dem Steuerglied 50 befindet sich ein zweites Steuerelement 21, das bei Bewegung des Steuerglieds 50 in die zweite Steuerstellung die Kupplung 20 öffnen kann, wobei zwischen dem Steuerglied 50 und dem erstem Steuerelement 21 ein zweites Übertragungselement angeordnet ist.

Das jeweilige Übertragungselement ist eine Kugel. Es können auch mehrere Übertragungselemente zum Ansteuern eines Steuerelements 11 oder 21 vorhanden sein.

Das jeweilige Steuerelement 11 oder 21 kann auch als "reaction plate" bezeichnet werden.

Die Steuerelemente 11 und 21 weisen jeweils eine Steuerrampe in Form einer Kugelrampe und eine Nut in Form einer Kugelnut auf. Es können auch mehrere Steuerrampen oder Nuten an dem Stellglied 50 oder einem Steuerelement 11 oder 21 vorhanden sein.

In einem neutralen Betriebszustand der Kupplungs-Brems-Einheit, also in einer Neutralstellung des Steuerglieds 50, sind sowohl die Bremse 10 als auch die Kupplung 20 geschlossen. Es ist also ein Kraftfluss zwischen den jeweiligen Rotoren und Statoren möglich. Dabei werden die Rotoren und die Statoren jeweils der Kupplung 10 als auch der Bremse 20 durch Federkraft zusammengedrückt. Hierfür sind jeweils Federeinheiten 30 vorgesehen. Die Federeinheiten 30 sind in Federtaschen angeordnet.

Die Ausführungsform des Ausführungsbeispiels ist also in einer "Power off"-Auslegung ausgeführt. Sofern der Elektromotor stromlos ist, sind sowohl Bremse 10 und Kupplung 20 beide durch Federkraft geschlossen. Bei einer "Power on"-Auslegung der Ausführungsform wären die Bremse 10 und die Kupplung 20 bei stromlosem Elektromotor geöffnet.

Liegt ein Drehmoment bei stromlosem Elektromotor am Antrieb 1 an, wird das Drehmoment nicht an den Abtrieb 2 weitergeleitet, da die Bremse 10 geschlossen ist und die Kupplung 20 keine Arbeit verrichtet.

Sofern sich das Steuerglied 50 in die erste Steuerstellung bewegt, wird das erste Steuerelement 11 durch das erste Übertragungselement derart bewegt, dass sich die Bremse 10 gegen die von der der Bremse 10 zugeordneten Federeinheit 30 ausgeübten Federkraft öffnet. Bei einer Bewegung des Steuerglieds 50 in die erste Steuerstellung wird das erste Übertragungselement auf die Steuerrampe des ersten Steuerelements 11 gedrückt, wobei sich der Abstand zwischen dem Steuerglied 50 und dem ersten Steuerelement 11 vergrößert, womit die Bremse 10 geöffnet wird.

Das Steuerglied 50 wird dabei über das Zahnsegment von dem Ritzel des Elektromotors bewegt.

Sofern also der Elektromotor entsprechend bestromt wird und sich je nach konstruktiver Ausführung der Steuereinheit im Uhrzeigersinn oder gegen den Uhrzeigersinn dreht, wird das Steuerglied 50 in die erste Steuerstellung bewegt, wobei das erste Steuerelement 11 durch das erste Übertragungselement mittels der an dem ersten Steuerelement vorhandenen Steuerrampe bewegt wird und die Bremse 10 durch das erste Steuerelement 11 gegen die Federkraft geöffnet wird.

Ein an dem Antrieb 1 anliegendes Drehmoment wird weitergeleitet und über die durch Federkraft geschlossene Kupplung 20 an den Abtrieb 2 abgegeben.

Damit sich der Öffnungszustand der Kupplung 20 in der ersten Steuerstellung nicht ändert und diese geschlossen bleibt, läuft das zweite Übertragungselement nicht auf der Steuerrampe, sondern in der Nut des zweiten Steuerelements 21, wenn sich das Steuerglied 50 in die erste Steuerstellung bewegt.

Die Kupplungs-Brems-Einheit 100 ist mit einer Steuerklappe eines Flugzeugs verbunden. Die Steuerklappe am Flugzeug kann jetzt verfahren und positioniert werden. Damit sich das durch den Elektromotor angetriebene Steuerglied 50 nicht axial verschiebt, wird diese durch zwei Axiallager 51 im Gehäuse in Position gehalten. Damit wird gezielt nur eines der beiden Steuerelemente 11 oder 21 axial verschoben, wenn sich das Steuerglied 50 in die erste oder zweite Steuerstellung bewegt.

Wenn der Elektromotor jetzt wieder stromlos geschalten wird, schließt sich die Bremse 10 durch die Federkraft wieder und der Elektromotor dreht sich ebenfalls durch die anliegende und entsprechend der Federrate gesteigerte Federkraft in dessen Ausganslage, also in seine Mittelstellung zurück. Die Steuerklappe am Flugzeug wird in der aktuellen Position fixiert.

Wenn die Steuerklappe wieder in die Ausgangslage zurückbewegt werden soll, wird der Elektromotor wieder entsprechend bestromt, die Bremse 10 wird wieder geöffnet und das am Antrieb 1 anliegende Drehmoment verfährt die Steuerklappe wieder in die Ausgangslage. Danach wird der Elektromotor wieder stromlos geschalten.

Sofern sich das Steuerglied 50 in die zweite Steuerstellung bewegt, wird das zweite Steuerelement 21 durch das zweite Übertragungselement derart bewegt, dass sich die Kupplung 20 gegen die von der der Kupplung 20 zugeordneten Federeinheit 30 ausgeübten Federkraft öffnet. Bei einer Bewegung des Steuerglieds 50 in die zweite Steuerstellung wird das zweite Übertragungselement auf die Steuerrampe des zweiten Steuerelements 21 gedrückt, wobei sich der Abstand zwischen dem Steuerglied 50 und dem zweiten Steuerelement 21 vergrößert, womit die Kupplung 20 geöffnet wird.

Das Steuerglied 50 wird dabei über das Zahnsegment von dem Ritzel des Elektromotors bewegt.

Sofern also der Elektromotor entsprechend bestromt wird und sich je nach konstruktiver Ausführung der Steuereinheit im Uhrzeigersinn oder gegen den Uhrzeigersinn dreht, wird das Steuerglied 50 in die zweie Steuerstellung bewegt, wobei das zweite Steuerelement 21 durch das zweite Übertragungselement mittels der an dem zweiten Steuerelement vorhandenen Steuerrampe bewegt wird und die Kupplung 21 durch das zweite Steuerelement 21 gegen die Federkraft geöffnet wird.

Damit sich der Öffnungszustand der Bremse 10 in der zweiten Steuerstellung nicht ändert und diese geschlossen bleibt, läuft das erste Übertragungselement nicht auf der Steuerrampe, sondern in der Nut des ersten Steuerelements 11, wenn sich das Steuerglied 50 in die zweite Steuerstellung bewegt.

Ein an dem Abtrieb 2 anliegendes Drehmoment wird von der Bremse 10 gebremst.

Wenn also die Steuerklappe floatend geschalten werden soll, wird der Elektromotor entsprechend bestromt und das Steuerglied 50 bewegt sich in die zweite Steuerstellung, die Bremse 10 bleibt geschlossen und die Kupplung 20 wird durch die Steuerrampe, also mittels des zweiten Übertragungselements und des zweiten Steuerelements, geöffnet.

Die Steuerrampen und Nuten der ersten und zweiten Steuerelemente sind geometrisch spiegelbildlich. In anderen Worten erfolgt ein Ansteuern der Bremse 10 und/oder der Kupplung 20 mittels einer Kugelrampenmechanik.

Die Steuerklappe am Flugzeug kann sich jetzt entsprechend der anliegenden Last an der Steuerklappe frei einstellen. Nach erreichender stabilen Steuerklappenstellung kann der Elektromotor wieder stromlos geschalten werden. Die Kupplung 20 schließt sich durch die Federkraft wieder und der Elektromotor dreht sich ebenfalls durch die anliegende und entsprechend der Federrate gesteigerte Federkraft in dessen Mittelstellung zurück. Die Bremse 10 ist nach wie vor geschlossen. Die Steuerklappe am Flugzeug wird in der aktuellen Position fixiert.

In vorteilhafter Weise weist die erfindungsgemäße Kupplungs-Brems-Einheit eine kompakte Bauweise im Vergleich zu aus dem Stand der Technik bekannten, insbesondere elektrisch oder elektromagnetisch betätigten, Kupplungs-Brems-Einheiten auf. Vorzugsweise wird nur ein Aktuator benötigt. Vorzugsweise erfolgt eine Kraftverstärkung durch eine mögliche Übersetzung zwischen Ritzel und Zahnsegment des Steuerglieds. Vorzugsweise erfolgt eine Kraftverstärkung mittels der Steuerrampenmechanik. In vorteilhafter Weise liefert ein Elektromotor bei jeder Drehzahl sein maximales bzw. ein konstantes. Drehmoment. Vorzugsweise ist ein "Power off"- oder "Power on"-Konzept der Kupplungs-Brems-Einheit möglich.

## Patentansprüche

1. Kupplungs-Brems-Einheit, insbesondere für ein Luftfahrzeug, mit einer Bremse, einer Kupplung und einer Steuereinheit, die derart ausgebildet und angeordnet ist, um die Bremse und/oder die Kupplung anzusteuern, **dadurch gekennzeichnet, dass** die Steuereinheit einen Aktuator und ein bewegbares Steuerglied aufweist, wobei der Aktuator dazu ausgebildet und angeordnet ist, um das Steuerglied aus einer Neutralstellung in eine erste und/oder zweite Steuerstellung zu bewegen, wodurch die Bremse und/oder die Kupplung angesteuert werden kann.

2. Kupplungs-Brems-Einheit nach Anspruch 1, **dadurch gekennzeichnet, dass** der Aktuator ein elektrischer Aktuator, insbesondere ein Elektromotor, ist und/oder eine drehbare Welle und/oder ein Ritzel aufweist.

3. Kupplungs-Brems-Einheit nach einem der Ansprüche 1 oder 2, **dadurch gekennzeichnet, dass** das Steuerglied derart ausgebildet und angeordnet ist, um in der ersten Steuerstellung die Bremse anzusteuern und um in der zweiten Steuerstellung die Kupplung anzusteuern, wobei in der Neutralstellung weder die Bremse noch die Kupplung angesteuert werden.

4. Kupplungs-Brems-Einheit nach einem der vorhergehenden Ansprüche, **dadurch gekennzeichnet, dass** das Steuerglied, vorzugsweise jeweils an gegenüberliegenden Seiten, eine Steuerrampe und/oder eine Nut aufweist.

5. Kupplungs-Brems-Einheit nach einem der vorhergehenden Ansprüche, **dadurch gekennzeichnet, dass** die Steuereinheit ein erstes und/oder ein zweites Steuerelement aufweist, wobei das erste Steuerelement vorzugsweise an einer Seite des Stellglieds angeordnet ist und/oder wobei das zweite Steuerelement vorzugsweise an der anderen Seite des Stellglieds angeordnet ist.

6. Kupplungs-Brems-Einheit nach Anspruch 5, **dadurch gekennzeichnet, dass** das erste und/oder das zweite Steuerelement eine Steuerrampe und/oder eine Nut aufweisen.

7. Kupplungs-Brems-Einheit nach einem der Ansprüche 5 oder 6, **dadurch gekennzeichnet, dass** das erste Steuerelement zum Ansteuern der Bremse und das zweite Steuerelement zum Ansteuern der Kupplung ausgebildet und angeordnet ist.

8. Kupplungs-Brems-Einheit nach einem der vorhergehenden Ansprüche, **dadurch gekennzeichnet, dass** die Steuereinheit ein erstes und/oder ein zweites Übertragungselement aufweist, wobei das erste Übertragungselement an einer Seite des Stellglieds angeordnet ist und/oder wobei das zweite Übertragungselement an einer anderen Seite des Stellglieds angeordnet ist.

9. Kupplungs-Brems-Einheit nach Anspruch 8, **dadurch gekennzeichnet, dass** das erste Übertragungselement zwischen dem Steuerglied und dem ersten Steuerelement und/oder das zweite Übertragungselement zwischen dem Stellglied und dem zweiten Steuerelement angeordnet ist, wobei jedes Übertragungselement vorzugsweise direkt an einer Steuerrampe oder Nut angeordnet ist.

10. Kupplungs-Brems-Einheit nach einem der vorhergehenden Ansprüche, **dadurch gekennzeichnet, dass** die Kupplungs-Brems-Einheit Federeinheiten aufweist, wobei die Bremse und/oder die Kupplung in der Neutralstellung des Steuerglieds durch jeweils eine Federeinheit geöffnet oder geschlossen gehalten werden.

11. Kupplungs-Brems-Einheit nach einem der vorhergehenden Ansprüche, **dadurch gekennzeichnet, dass** das Steuerglied, insbesondere durch ein Axiallager, gegen eine axiale Bewegung gegenüber der Kupplungs-Brems-Einheit abgestützt ist.

12. Kupplungs-Brems-Einheit nach einem der vorhergehenden Ansprüche, **dadurch gekennzeichnet, dass** die Steuereinheit derart ausgebildet und angeordnet ist, um die Bremse und/oder die Kupplung derart ansteuern zu können, dass entweder die Bremse oder die Kupplung geöffnet oder die Bremse und die Kupplung beide geschlossen sind, wobei die Bremse und die Kupplung in keinem Betriebszustand der Kupplungs-Brems-Einheit beide geöffnet sind.

13. Kupplungs-Brems-Einheit nach einem der Ansprüche 1 bis 11, **dadurch gekennzeichnet, dass** die Steuereinheit derart ausgebildet und angeordnet ist, um die Bremse und die Kupplung derart ansteuern zu können, dass entweder die Bremse oder die Kupplung geschlossen oder die Bremse und die Kupplung beide geöffnet sind, wobei die Bremse und die Kupplung in keinem Betriebszustand der Kupplungs-Brems-Einheit beide geschlossen sind.

14. Luftfahrzeug, insbesondere Flugzeug, mit einer Kupplungs-Brems-Einheit nach einem der vorhergehenden Ansprüche.

15. Verfahren zum Betätigen einer Kupplungs-Brems-Einheit nach einem der Ansprüche 1 bis 13 mit den folgenden Schritten:
- Bewegen des Steuerglieds aus einer Neutralstellung in eine erste Steuerstellung durch den Aktuator, wobei sich die Bremse öffnet oder schließt, wobei die Kupplung geöffnet oder geschlossen bleibt; und/oder
- Bewegen des Steuerglieds aus einer Neutralstellung in eine zweite Steuerstellung durch den Aktuator, wobei sich die Kupplung öffnet oder schließt, wobei die Bremse geöffnet oder geschlossen bleibt; und/oder
- Bewegen des Steuerglieds aus einer ersten oder zweiten Steuerstellung in eine Neutralstellung durch den Aktuator, wobei sich die Bremse oder die Kupplung öffnet oder schließt, wobei die Bremse oder die Kupplung geöffnet oder geschlossen bleiben.
